# EUROPEAN PATENT APPLICATION

(11) **EP 3 742 799 A1**
(43) Date of publication of application: **25.11.2020**
(21) Application number: 19777330.2
(22) Date of filing: 28.02.2019
(51) Int. Cl.: H04W 36/00

(54) **COMMUNICATION METHOD AND DEVICE**

(30) Priority: 31.03.2018 CN 201810278868
(71) Applicant: HUAWEI TECHNOLOGIES CO., LTD., Shenzhen, Guangdong 518129 (CN)
(72) Inventor: MA, Jingwang, Shenzhen, Guangdong 518129 (CN)
(74) Representative: Maiwald Patent- und Rechtsanwaltsgesellschaft mbH
(86) International application number: PCT/CN2019/076595
(87) International publication number: WO 2019/184651

(57) **Abstract**

A communications method and apparatus are provided. The communications method includes: receiving, by a central unit-control plane, a second message from a core network element, where the second message carries assistance information, and the assistance information includes an identifier of a first data network corresponding to a protocol data unit session; and determining, by the central unit-control plane based on the assistance information, a first central unit-user plane corresponding to the protocol data unit session. According to the method and the apparatus in this application, an appropriate central unit-user plane may be selected for the PDU session.

## Description

This application claims priority to Chinese Patent Application No. 201810278868.6, filed with the Chinese Patent Office on March 31, 2018 and entitled "COMMUNICATIONS METHOD AND APPARATUS", which is incorporated herein by reference in its entirety.

### TECHNICAL FIELD

This application relates to the field of communications technologies, and in particular, to a communications method and apparatus.

### BACKGROUND

Currently, a new network architecture is proposed in evolution of LTE Rel-15 and 5G NR. In this network architecture, functions of an access network are divided into two units: a central unit (central unit, CU) and a distributed unit (distributed unit, DU). Functions of the CU are further divided into a central unit-control plane (CU-C, central unit-control plane) part and a central unit-user plane (CU-U, central unit-user plane) part. Currently, the entire access network may include one CU-C and a plurality of CU-Us. In this case, there is no related solution to how to determine, from the CU-Us in the access network, a first CU-U corresponding to a protocol data unit (protocol data unit, PDU) session.

### SUMMARY

This application provides a communications method and apparatus, to select a proper central unit-user plane for a PDU session.

According to a first aspect, this application provides a communications method, including: receiving, by a CU-C, a second message from a core network element, where the second message carries assistance information, and the assistance information includes an identifier of a second data network corresponding to a protocol data unit session; and determining, by the CU-C based on the assistance information, a first CU-U corresponding to the PDU session.

In a network architecture, an access network includes one or more CU-Us, and one PDU unit corresponds to only one CU-U during user plane data transmission. According to the method provided in embodiments of this application, the first CU-U corresponding to the PDU may be determined.

In an example of this application, the CU-C stores configuration information of the CU-Us. In an embodiment of this application, the CU-C may locally obtain the configuration information of the one or more CU-Us, and then may determine, based on the assistance information and the configuration information of the CU-Us, the first CU-U corresponding to the protocol data unit PDU session.

In this example, the CU-C may directly obtain the configuration information of the CU-Us, and then determine, based on the configuration information of the CU-Us, the first CU-U corresponding to the PDU session, without a need to interact with another network element. Therefore, processing efficiency is relatively high.

In another example of this application, an NRF stores configuration information of the CU-Us. When receiving the third message, the CU-C may send the third message to the NRF, where the third message carries the assistance information. The NRF may determine the one or more CU-Us based on the assistance information carried in the third message and the configuration information of the CU-Us, and then send a fourth message to the NRF, where the fourth message includes identification information of the one or more CU-Us. The CU-C may determine, based on the fourth message, the first CU-U corresponding to the PDU session.

In this example, the configuration information of the CU-Us is no longer stored in the CU-C, and is instead stored in the NRF. The NRF specifically performs a process of determining the CU-U corresponding to the PDU session. This can reduce load of the CU-C, and can improve calculation efficiency of the CU-C.

In an embodiment of this application, the assistance information further includes one or more of an identifier of a network slice corresponding to the PDU session and an identifier of a UPF corresponding to the PDU session, and the configuration information further includes one or more of an identifier of a network slice corresponding to the CU-U and the identifier of the UPF corresponding to the PDU session.

In an embodiment of this application, a UPF and the CU-U may be co-located, and the identifier that is of the UPF and that is in the assistance information may specifically be an identifier of the UPF that may be co-located with the CU-U. In this way, during data transmission of the PDU session, the CU-U may specifically communicate with the UPF co-located with the CU-U, so that a communication distance is short, and communication efficiency is relatively high.

In another example of this application, after obtaining the first CU-U corresponding to the PDU session, the CU-C may send a sixth message to a DU corresponding to the PDU session, where the sixth message includes an identifier of the first CU-U, and the sixth message is used to request the DU to establish the PDU session between the DU and the first CU-U. After receiving the sixth message, the DU may establish the PDU session between the DU and the first CU-U.

In another example of this application, after obtaining the first CU-U corresponding to the PDU session, the CU-C may further determine a seventh message based on the PDU session setting information, where the seventh message includes the core network tunnel configuration information, and the CU-C may send the seventh message to the first CU-U, where the seventh message is used to request the first CU-U to establish the PDU session between the first CU-U and a UPF. After receiving the seventh message, the first CU-U may establish the PDU session between the first CU-U and the UPF.

In an embodiment of this application, specifically, the PDU session setting information further includes one or more of a PDU session identifier, a communication quality parameter identifier, and an aggregate maximum rate, and the seventh message further includes one or more of the identifier of the DN corresponding to the PDU session, an identifier of a network slice, the PDU session identifier, the communication quality parameter identifier, and the aggregate maximum rate.

According to a second aspect, this application further provides a communications method, including: receiving, by a core network element, a first message from a terminal device, where the first message is used to request to establish a PDU session for the terminal device; and determining, by the core network element, assistance information, where the assistance information includes at least an identifier of a second data network corresponding to the PDU session; and sending, by the core network element, second information to a CU-C, where the second message carries the assistance information.

Optionally, the assistance information further includes at least one of an identifier of a network slice corresponding to the PDU session and an identifier of a UPF corresponding to the PDU session.

According to a third aspect, this application further provides a communications method, including: receiving, by an NRF, a third message from a CU-C, where the first message carries assistance information, and the assistance information includes at least an identifier of a second data network corresponding to a PDU session; and determining, by the NRF, one or more CU-Us based on configuration information of the CU-Us and the assistance information, where the configuration information of the CU-Us includes at least an identifier of a data network corresponding to the CU-U; and sending, by the NRF, a fourth message to the CU-C, where the fourth message includes identification information of the one or more CU-Us.

Optionally, the assistance information further includes one or more of an identifier of a network slice corresponding to the PDU session and an identifier of a UPF corresponding to the PDU session, and the configuration information further includes one or more of an identifier of a network slice corresponding to the CU-U and the identifier of the UPF corresponding to the PDU session.

According to a fourth aspect, this application further provides a communications method, where the method includes: receiving, by an NRF, a fifth message from one CU-U, where the fifth message includes at least an identifier of a data network corresponding to the CU-U, and the fifth message is used to request to register configuration information of the CU-U with the NRF; and determining, by the NRF, the configuration information of the CU-U based on the fifth message.

Specifically, the fifth message may further include network function type information of the CU-U, an identifier of the CU-U, a network address of the CU-U, an identifier of a network slice corresponding to the CU-U, an identifier of a network area corresponding to the CU-U, and an identifier of a UPF corresponding to the CU-U. Correspondingly, the configuration information of the CU-U may further include the network function type information of the CU-U, the identifier of the CU-U, the network address of the CU-U, the identifier of the network slice corresponding to the CU-U, the identifier of the network area corresponding to the CU-U, and the identifier of the UPF corresponding to the CU-U.

According to a fifth aspect, this application further provides a communications method, where the method includes: receiving, by a DU, a sixth message from a CU-C, where the sixth message includes an identifier of a first CU-U that corresponds to a determined PDU session and that is in one or more CU-Us in an access network; and establishing, by the DU, the PDU session between the DU and the first CU-U based on the sixth message.

According to a sixth aspect, this application further provides a communications method, where the method includes: receiving, by a first CU-U, a seventh message from a CU-C, where the seventh message includes at least core network tunnel configuration information; and establishing, by the first CU-U, a PDU session between the first CU-U and a UPF based on the seventh message.

Optionally, the seventh message may further include at least one of an identifier of a DN corresponding to the PDU session, an identifier of a network slice, a PDU session identifier, a communication quality parameter identifier, and an aggregate maximum rate.

According to a seventh aspect, an embodiment of this application provides a communications apparatus, and the communications apparatus may perform any one of the foregoing methods.

In a possible design, the apparatus includes one or more processing units and a communications unit. The one or more processing units are configured to support the apparatus in performing a corresponding function of the user plane device in the foregoing methods. The communications unit is configured to support the apparatus in communicating with another device, to implement a receiving function and/or a sending function, for example, receiving a first message.

The apparatus may be a central unit-control plane CU-C, a core network element, an NRF, a DU, a CU-U, or the like. The communications unit may be a communications interface. Optionally, the communications interface may be an input/output circuit or interface.

The apparatus may alternatively be a communications chip. The communications unit may be an input/output circuit or interface of the communications chip.

In another possible design, the apparatus includes a communications interface and a processor. The processor is configured to control the communications interface to receive and send a signal. The processor is configured to run a computer program, so that the apparatus performs the communications method in any one of the first aspect to the sixth aspect or the possible implementations in the first aspect to the sixth aspect.

Optionally, the apparatus may further include a memory. The memory is configured to store the computer program. The processor may be specifically configured to run the computer program in the memory, so that the apparatus performs the communications method in any one of the first aspect to the sixth aspect or the possible implementations in the first aspect to the sixth aspect.

According to an eighth aspect, an embodiment of this application further provides a readable storage medium. The readable storage medium stores a program or an instruction. When the program or the instruction is run on a computer, the communications method in the foregoing aspects is performed.

According to a ninth aspect, an embodiment of this application further provides a computer program product including an instruction. When the computer program product runs on a computer, a computer is enabled to perform the communications method in the foregoing aspects.

According to a tenth aspect, this application further provides a communications system. The communications system includes one or more of a CU-C, a core network element, an NRF, a DU, and a CU-U.

The CU-C is configured to perform the method in any one of the first aspect or the designs in the first aspect. The core network element is configured to perform the method in any one of the second aspect or the manners of the second aspect. The NRF is configured to perform the method in any one of the third aspect or the manners in the third aspect, or perform the method in any one of the fourth aspect or the manners in the fourth aspect. The DU is configured to perform the method in any one of the fifth aspect or the manners in the fifth aspect. The CU-U is configured to perform the method in any one of the sixth aspect or the manners in the sixth aspect.

Optionally, in a possible design, the system may further include another device, such as an access and mobility management device or a terminal device, that interacts with the network element in the solutions provided in the embodiments of this application.

In addition, for technical effects brought by any design manner in the first aspect to the tenth aspect, refer to technical effects brought by different implementations in the first aspect to the fourth aspect. Details are not described herein again. These aspects or other aspects in the embodiments of this application are clearer and more comprehensible in descriptions of the following embodiments.

### BRIEF DESCRIPTION OF DRAWINGS

FIG. 1a, FIG. 1b, and FIG. 2 show network architectures according to embodiments of this application;
FIG. 3 is a flowchart of a communications method according to an embodiment of this application;
FIG. 4 is another flowchart of a communications method according to an embodiment of this application;
FIG. 5 is still another flowchart of a communications method according to an embodiment of this application;
FIG. 6 is another flowchart of a communications method according to an embodiment of this application;
FIG. 7 is still another flowchart of a communications method according to an embodiment of this application;
FIG. 8 is a schematic structural diagram of a communications apparatus according to an embodiment of this application;
FIG. 9 is another schematic structural diagram of a communications apparatus according to an embodiment of this application;
FIG. 10 is still another schematic structural diagram of a communications apparatus according to an embodiment of this application;
FIG. 11 is another schematic structural diagram of a communications apparatus according to an embodiment of this application;
FIG. 12 is still another schematic structural diagram of a communications apparatus according to an embodiment of this application;
FIG. 13 is still another schematic structural diagram of a communications apparatus according to an embodiment of this application;
FIG. 14 is another schematic structural diagram of a communications apparatus according to an embodiment of this application;
FIG. 15 is another schematic structural diagram of a communications apparatus according to an embodiment of this application;
FIG. 16 is another schematic structural diagram of a communications apparatus according to an embodiment of this application; and
FIG. 17 is another schematic structural diagram of a communications apparatus according to an embodiment of this application.

### DESCRIPTION OF EMBODIMENTS

A network architecture and a service scenario described in embodiments of this application do not constitute a limitation on the technical solutions provided in the embodiments of this application. A person of ordinary skill in the art may learn that, with evolution of a network architecture and emergence of a new service scenario, the technical solutions provided in the embodiments of this application are also applicable to a similar technical problem.

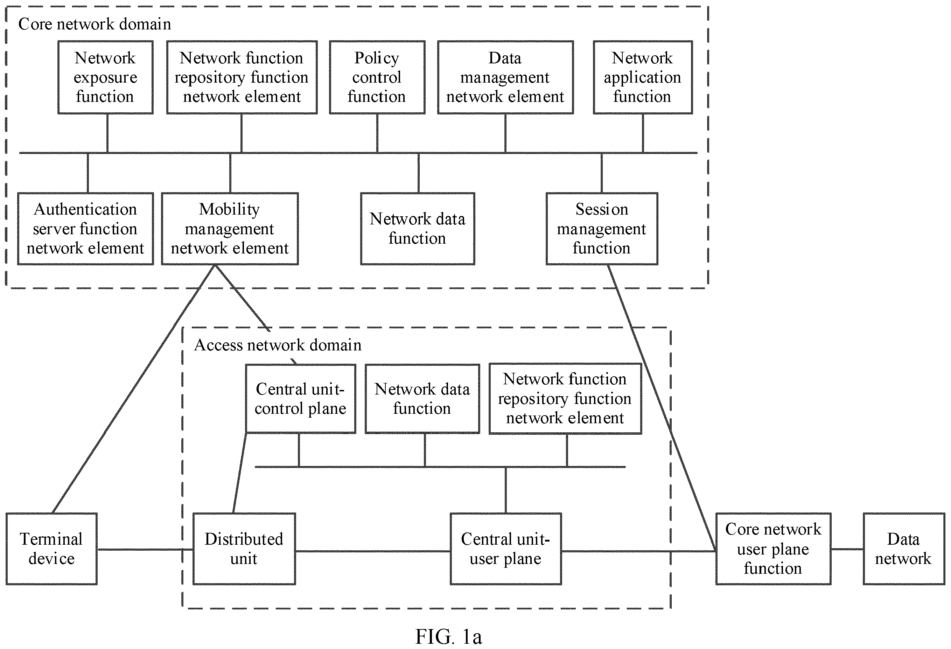

FIG. 1a is a schematic diagram of a possible network architecture to which an embodiment of this application is applicable.

Network elements that may be involved in the communications method provided in this application mainly include a terminal device, access network elements, and core network elements.

The terminal device is a device having a wireless communication function, and may be deployed on land, including an indoor device, an outdoor device, a handheld device, or a vehicle-mounted device, or may be deployed on a water surface (such as a ship), or may be deployed in the air (for example, on an aircraft, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like, or may be user equipment (user equipment, UE), a mobile station (mobile station, MS), or a terminal device (terminal device) in various forms.

The access network elements may include a distributed network element, a central unit-control plane, a central unit-user plane, a network function repository function network element, and an NWDA.

The distributed unit is configured to process a physical layer for baseband processing and some protocol stack functions of layer 2, for example, a radio link control (radio link control, RLC) layer, a media access control (media access control, MAC) layer, and the physical layer (physical layer, PHY). The DU is connected to a CU and user equipment (user equipment, UE). In a downlink communications link, the DU is configured to receive data from the CU and send the data to the UE. In an uplink communications link, the DU is configured to receive data from the UE and send the data to the CU. In systems using different radio access technologies, devices having a DU function may have different names. For ease of description, the devices having the DU function are collectively referred to as an access network distributed unit device. In 5G, the distributed unit may be a (distributed unit, DU) network element. In a future communications system, for example, in 6G, a distributed unit may be the DU or have another name. This is not limited in this application.

The central unit-control plane is configured to control the CU-UP and the DU to perform operations such as service establishment, release, and data forwarding, and involved protocols include an RRC layer and a PDCP layer. In systems using different radio access technologies, devices having a CU-CP function may have different names. For ease of description, the devices having the CU-CP function are collectively referred to as an access network control plane device. In 5G, the central unit-control plane may be a (central unit-control, CU-C) network element. In a future communications system, for example, in 6G, a distributed unit may be the CU-C or have another name. This is not limited in this application.

The central unit-user plane is configured to transmit service data based on configuration of the CU-CP. Similarly, in systems using different radio access technologies, devices having a CU-UP function may have different names. For ease of description, the devices having the CU-UP function are collectively referred to as an access network user plane device. In 5G, the central unit-user plane may be (central unit-user, CU-U). In a future communications system, for example, in 6G, a distributed unit may be the CU-C or have another name. This is not limited in this application.

A network function repository function NRF network element has NF registration and discovery functions. In 5G, the network function repository function network element may be an NRF (network function repository function) network element. It may be understood that in the future communication, a network element responsible for network function registration and discovery functions may still be the NRF network element or may have another name. This is not limited in this application.

The core network elements may include an NEF, a network function repository function network element, a policy control function, a data management network element, an AF, an authentication server function network element, a mobility management network element, an NWDA, a policy control function, and a core network user plane function.

The mobility management network element is responsible for access management and mobility management of the terminal device. In actual application, the mobility management network element includes a mobility management function in a mobility management entity (mobility management entity, MME) in a network framework in long term evolution (long term evolution, LTE), and supports an access management function. In 5G, the mobility management network element may be an AMF (access and mobility management function) network element. In future communication, for example, in 6G, a mobility management network element may still be the AMF network element or have another name. This is not limited in this application.

The data management network element is configured to store user authentication data and user subscription data. In 5G, the data management network element may be a UDM (unified data management, unified data management network element) network element. It may be understood that in the future communication, a network element responsible for storing user authentication data and user subscription data may still be the UDM network element or may have another name. This is not limited in this application.

A core network user plane function is responsible for packet processing and forwarding. The user plane network element may be a physical or virtual forwarding device such as a forwarding plane function (PGW-U) of a PGW, a forwarding plane function (SGW-U) of an SGW, a router, or a switch. In 5G, the core network user plane function may be referred to as a (user plane function, UPF). In future communication, for example, in 6G, a core network user plane function may still be the UPF network element or have another name. This is not limited in this application.

The authentication server function network element is used for authentication and authorization. In 5G, the network function repository function network element may be an AUSF (authentication server function) network element. It may be understood that in the future communication, a network element responsible for authentication and authorization may still be the AUSF network element or may have another name. This is not limited in this application.

A session management function is responsible for forwarding path management. For example, the session management function delivers a packet forwarding policy to the user plane network element, to indicate the user plane network element to process and forward a packet according to the packet forwarding policy. The session management function may be a session management function (session management function, SMF) entity in 5G, and is responsible for session management, for example, session creation/modification/deletion, UPF selection, and user plane tunnel information allocation and management. Alternatively, the session management function may be a control plane function (SGW-C) of a serving gateway (Serving GateWay, SGW) in 4G or a control plane function (PGW-C) of a packet data network (packet data network, PDN) gateway (gate way, GW) in 4G. Alternatively, the session management function may be all or a part of a control function formed after an SMF network element and a PGW-C network element are integrated. In future communication (for example, in 6G or another network), a session management function may still be the SMF network element or have another name. This is not limited in this application.

Optionally, the network architecture shown in FIG. 1a may further include a data network (data network, DN), to provide a data transmission service for a user, and the data network may be a PDN network, such as an internet (internet) or an IP multimedia service (IP Multi-media Service, IMS).

In addition, the system architecture may further include a network application function (application function, AF). The AF mainly performs dynamic policy or charging control on forwarding plane behavior. These services need the dynamic policy and the charging control. The AF transmits dynamic session information required by the PCF, and receives specific information of an IP connection access network (IP-CAN) and acknowledgment of an IP-CAN bearer level event.

The foregoing functions may be network elements in a hardware device, or may be software functions running on dedicated hardware, or may be virtualization functions instantiated on a platform (such as a cloud platform).

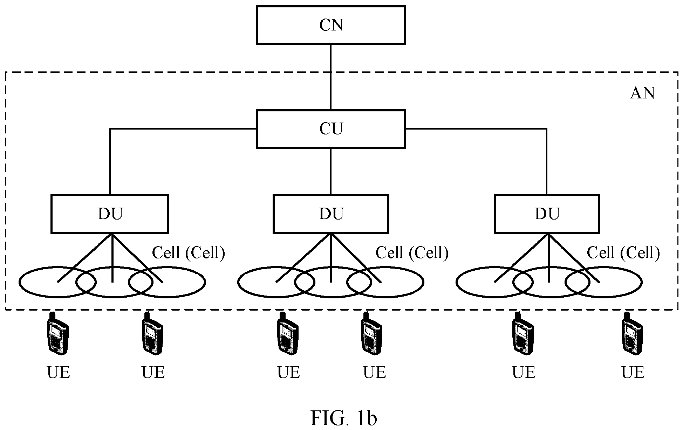

As shown in FIG. 1b, an embodiment of this application provides a network architecture. In the network architecture, functions of an access network (access network, AN) are divided into two units: a central unit (central unit, CU) and a distributed unit (distributed unit, DU).

The CU processes protocol stack functions of a radio higher layer, for example, a radio resource control (radio resource control, RRC) layer, a service data adaptation protocol (service data adaptation protocol, SDAP) layer, and a packet data convergence protocol (packet data convergence protocol, PDCP) layer. The DU processes a physical layer for baseband processing and some protocol stack functions of layer 2, for example, a radio link control (radio link control, RLC) layer, a media access control (media access control, MAC) layer, and the physical layer (physical layer, PHY).

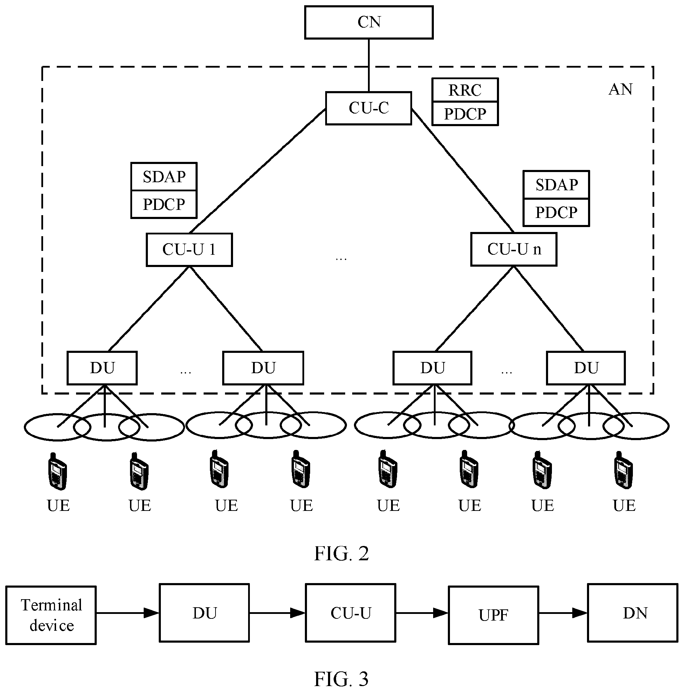

Further, as shown in FIG. 2, functions of the CU may be further divided into two nodes: a central unit-control plane (CU-C, central unit-control) and a central unit-user plane (CU-U, central unit-user). The CU-C is configured to configure the DU and the CU-U, and related protocol layers include the RRC layer and the PDCP layer. The CU-U is configured to transmit a data service based on the configuration of the CU-C, and related protocol layers include the SDAP layer and the PDCP layer.

Further, in a network architecture shown in FIG. 2, an entire AN may include one CU-C and one or more CU-Us, and each CU-U may be connected to one or more DUs. In addition, the one or more CU-Us in the access network may correspond to different DNs. For example, the entire access network includes n CU-Us. The n CU-Us may be a CU-U 1, a CU-U 2, and so on, until a CU-U n. The CU-U 1 may correspond to a DN 1, the CU-U 2 may correspond to a DN 2, and so on, and the CU-U n may correspond to a DN n.

Further, as shown in FIG. 3, for a protocol data unit (protocol data unit, PDU) session, on a user plane, a data transmission process of the PDU session may be: Terminal device→DU→CU-U→UPF→DN. It can be learned that one PDU session corresponds to only one CU-U. The access network shown in FIG. 2 may include one or more CU-Us. In this case, how to determine, from the one or more CU-Us in the access network, a CU-U corresponding to a current PDU session, is a problem that needs to be resolved in this application.

It should be noted that, in the network architecture shown in FIG. 1a, network elements included in the entire network architecture are described as only examples. In the embodiments of this application, only the network elements included in the entire network architecture are not limited. For example, in the embodiments of this application, the network architecture may include any one or more of all the network elements shown in FIG. 1a.

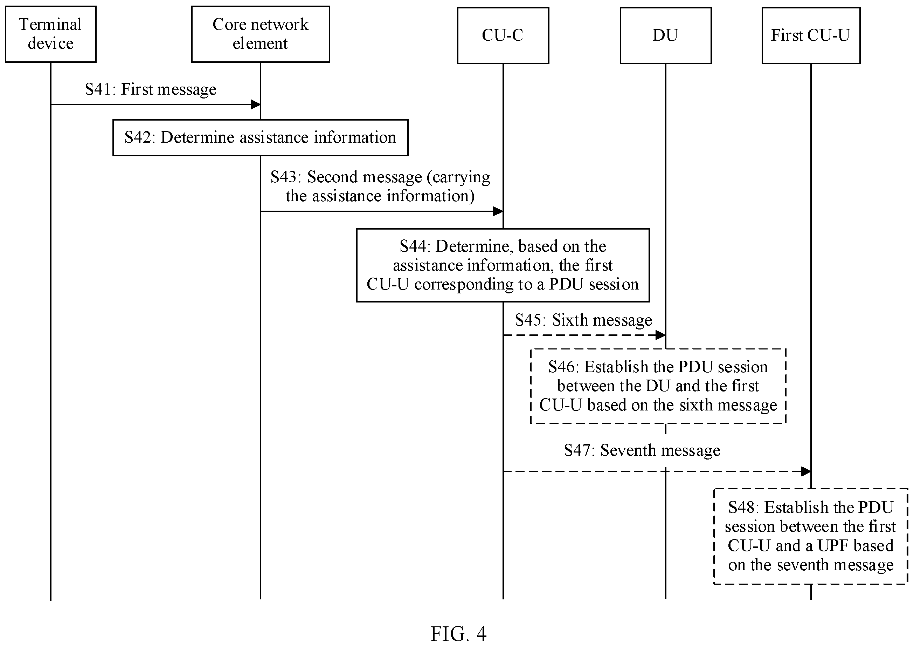

Based on the network architecture shown in FIG. 1b or FIG. 2, this application provides a communications method and apparatus. The communications method and apparatus are mainly used to resolve how to determine, in the one or more CU-Us in the access network, a first CU-U corresponding to a PDU session. FIG. 4 shows a procedure of the communications method provided in this application. For ease of description, an example in which access network elements are a CU-C, a DU, and a DU-U is used for description in the procedure shown in FIG. 4. It may be understood that, the CU-C, the CU-U, and the DU in the following descriptions may be replaced with other access network elements. A unified description is provided herein, and details are not described again subsequently. As shown in FIG. 4, the procedure is specifically as follows:
Step S41: A terminal device sends a first message to a core network element, where the first message is used to request to establish a PDU session for the terminal device.

Specifically, the first message may be a PDU session establishment request message.

Step S42: The core network element determines assistance information, where the assistance information includes an identifier of a first data network (data network, DN) corresponding to the PDU session.

In an example of this application, the first message may include one or more of a terminal device identifier, a PDU session identifier, the identifier of the first DN corresponding to the PDU session connection, and an identifier (S-NSSAI) of a network slice corresponding to the PDU session connection. In this embodiment of this application, the core network element may determine the assistance information based on the first message. For example, the core network element obtains, from the first message, the identifier of the first DN corresponding to the PDU session, and then determines the assistance information based on the identifier of the first DN. The core network element may alternatively determine, based on subscription information of the terminal device, policy configuration information of the PDU session, and the like, the identifier of the first DN corresponding to the PDU session that the terminal device requests to establish.

In another example of this application, the first information includes at least the identifier of the first DN corresponding to the PDU session connection, and an identifier of a network slice corresponding to the PDU session connection. The assistance information may include one or more of the identifier of the first DN, the identifier of the network slice, and an identifier of a core network user plane function (user plane function, UPF). The core network element may obtain the identifier of the first DN and the identifier of the network slice from the first information, and the core network element may select a UPF that serves the PDU session connection. A specific process may be: selecting the UPF based on the identifier of the first DN corresponding to the PDU session connection and the identifier of the network slice corresponding to the PDU session connection. When the first DN corresponding to the PDF session connection is a local data network, the core network element selects a UPF that serves the local data network.

In an example of this application, a UPF and the CU-U may be co-located, and an identifier that is of the UPF and that is in the assistance information may specifically be an identifier that the UPF that may be co-located with the CU-U has when the UPF and the CU-U are co-located. In this way, during PDU session transmission, the CU-U may directly communicate with the UPF co-located with the CU-U, so that a transmission distance is short, a communication rate is high, and resource utilization is improved.

Step S43: The core network element sends a second message to the CU-C, where the second message carries the assistance information.

Specifically, the second message may be a PDU session creation response message.

Step S44: The CU-C determines, based on the assistance information, a first CU-U corresponding to the PDU session.

In an example of this application, the CU-C may determine, in the following manner, the first CU-U corresponding to the PDU session: First, the CU-U locally stores configuration information of the CU-Us, where the configuration information of the CU-Us stores an identifier of a DN that may correspond to the CU-U. Then, the CU-C may locally obtain the configuration information of the one or more CU-Us in an access network, and determine, based on the configuration information of the CU-Us and the assistance information, the first CU-U corresponding to the PDU session.

In another example of this application, the CU-C may further determine, in the following manner, the first CU-U corresponding to the PDU session: When receiving the second message, the CU-C may send a third message to an NRF, where the third message carries the assistance information, and the NRF may determine, based on the assistance information carried in the third information and the configuration information of the CU-Us (the configuration information includes an identifier of a DN that may correspond to the CU-U), the one or more CU-Us corresponding to the assistance information, and may send a fourth message to the CU-C, where the fourth message includes an identifier of the one or more CU-Us. The CU-C may determine, based on the fourth message, the first CU-U corresponding to the PDU session. Specifically, the third message may be an NF discovery request message. The fourth message may be a discovery response message.

In another example of this application, the CU-C may further determine, in the following manner, the first CU-U corresponding to the PDU session: When receiving the second message, the CU-C may send a third message to an NRF, where the third message carries the assistance information, and the NRF may determine, based on the assistance information carried in the third information and the configuration information of the CU-Us, the CU-U corresponding to the PDU session, and may send a fourth message to the CU-C, where the fourth message includes an identifier of the one or more CU-Us. The CU-C may determine, based on the fourth message, the first CU-U corresponding to the PDU session.

In the foregoing example, it may be learned that the NRF stores the configuration information of the CU-Us. A process in which the NRF stores the configuration information of the CU-Us may be specifically as follows: First, one CU-U may send a fifth message to the network function repository function (network function repository function, NRF), where the fifth message includes at least an identifier of a data network corresponding to the CU-U, and the fifth message is used to request to register the configuration information of the CU-U with the NRF. The NRF may determine the configuration information of the CU-U based on the fifth message. Specifically, the fifth message may be an NF registration request.

Optionally, the fifth message further includes one or more of network function type (network function type, NF type) information of the CU-U, an identifier of the CU-U, a network address of the CU-U, an identifier of a network slice corresponding to the CU-U, an identifier of a network area corresponding to the CU-U, and an identifier of a UPF corresponding to the CU-U. Correspondingly, the configuration information of the CU-U may further include one or more of the NF type information of the CU-U, the identifier of the CU-U, the network address of the CU-U, the identifier of the network slice corresponding to the CU-U, the identifier of the network area corresponding to the CU-U, and the identifier of the UPF corresponding to the CU-U.

Optionally, the procedure shown in FIG. 4 may further include the following steps.

Step S45: The CU-C sends a sixth message to a DU corresponding to the PDU session, where the sixth message includes an identifier of the first CU-U, and the sixth message is used to request the DU to establish the PDU session between the DU and the first CU-U.

An identifier of a CU-U may be any information that can identify one CU-U, for example, may be the identifier of the first CU-U.

It should be noted that in this embodiment of this application, when sending the first message to the core network element to request the core network element to establish the PDU session for the terminal device, the terminal device has selected a DU, and provides the first message to the CU-C via the DU, and the CU-C further sends the first message to the core network element. Therefore, the CU-C has determined the DU used by the terminal device to access a network, and the PDU session established for the terminal device also uses the DU. Therefore, in step S45, the CU-C can learn of the DU corresponding to the PDU session.

Specifically, the sixth message may be a connection setting request.

Step S46: The DU establishes the PDU session between the DU and the first CU-U based on the sixth message.

Step S47: The CU-C sends a seventh message to the first CU-U, where the seventh message is used to request the first CU-U to establish the PDU session between the first CU-U and the UPF.

In an example of this application, the seventh message may be generated in the following manner. Specifically, the second message sent by the core network element to the CU-C may further include PDU session setting information, where the PDU session setting information includes core network tunnel configuration information. The core network element may generate the seventh message based on the PDU session setting information, where the seventh message includes at least the core network tunnel configuration information.

In another example of this application, the second message sent by the core network element to the CU-C includes two pieces of content: PDU session setting information and the assistance information, where the PDU session setting information may include one or more of the PDU session identifier, a communication quality parameter identifier, a core network tunnel configuration message, and an aggregate maximum rate, and the assistance information may include the identifier of the DN corresponding to the PDU session and the identifier of the network slice. In this embodiment of this application, the core network element may generate the seventh message based on at least the PDU session setting information, the assistance information, and an address of the DU corresponding to the PDU session. The seventh message may include one or more of the identifier of the DN corresponding to the PDU session, the identifier of the network slice, the PDU session identifier, the communication quality parameter identifier, the core network tunnel configuration message, the aggregate maximum rate, and the address of the DU corresponding to the PDU session.

Specifically, the seventh message may be a user plane setting request.

Step S48: The first CU-U establishes the PDU session between the first CU-U and the UPF based on the seventh message.

It can be learned from the foregoing description that, in the embodiments of this application, when the access network includes the one or more CU-Us, the first CU-U corresponding to the PDU session may be determined according to the communications method provided in this application.

It should be noted that in the embodiment shown in FIG. 4, terms such as "first" and "second" are merely used for distinguishing descriptions, and cannot be understood as an indication or implication of relative importance, or an indication or implication of a sequence.

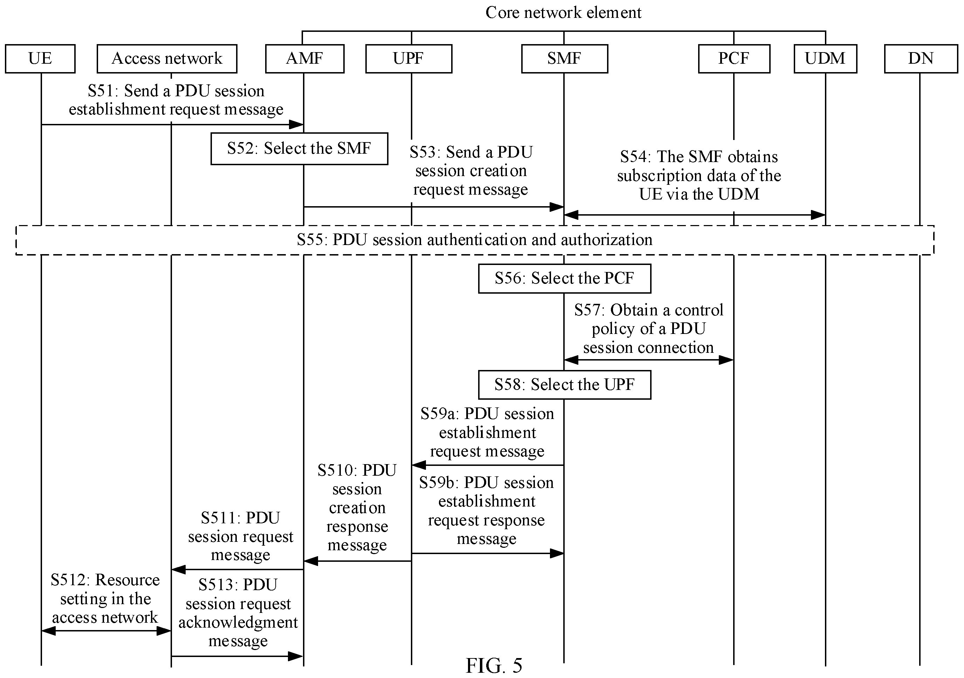

As shown in FIG. 5, this application provides a PDU session establishment procedure. A PDU session establishment request message in the procedure shown in FIG. 5 may correspond to the first message in the procedure shown in FIG. 4, and a PDU session creation response message may correspond to the second message in the procedure shown in FIG. 4. Unique network slice selection assistance information (single network slice selection assistance information, S-NSSAI) in the procedure shown in FIG. 5 corresponds to the identifier of the network slice corresponding to the PDU session in the procedure shown in FIG. 4. Access network user plane function selection assistance information in the procedure shown in FIG. 5 corresponds to the assistance information in the procedure shown in FIG. 4.

For ease of description, in the procedure shown in FIG. 5, an example in which core network elements include network elements such as an AMF, a PCF, a UDM, and a UPF, and access network elements include a CU-U, a CU-C, and a DU is used for description. Further, core network elements such as the AMF, the PCF, the UDM, and the UPF, and access network elements such as the CU-C, the CU-U, and the DU, and the like may be replaced with other network elements. A unified description is provided herein, and details are not described again subsequently. As shown in FIG. 5, the procedure specifically includes the following steps.

Step S51: UE sends the PDU session establishment request message to the AMF in the core network element.

In this embodiment of this application, the PDU session establishment request message includes a UE identifier, unique network slice selection assistance information (single network slice selection assistance information, S-NSSAI), a PDU session identifier (PDU session ID), and an identifier of a data network (data network identity, DN ID) corresponding to a PDU session connection.

The S-NSSAI is used to indicate a network slice corresponding to the to-be-established PDU session connection, and the PDU session identifier (PDU session ID) is used to uniquely identify the to-be-established PDU session connection, where the PDU session identifier may be generated by the UE. In this embodiment of this application, when the PDU session that is requested to be established is used to connect to a local data network, the DN ID may specifically be a local area data network (Local Area Data Network, LADN) identifier.

Step S52: After receiving the PDU session establishment request message, the AMF selects an SMF.

In an example of this application, the AMF may select the SMF based on the PDU session establishment request message. For example, the AMF may specifically determine, based on the S-NSSAI and the DN ID that are in the PDU session establishment request message, the SMF for processing the PDU session establishment request.

In another example of this application, after receiving the PDU session establishment request, the AMF may send a request message to a network function repository function (network function repository function, NRF), and then the NRF selects the SMF, and finally sends a response message to the AMF, where the response message includes the selected SMF

Step S53: The AMF sends a PDU session creation request message to the selected SMF

In this embodiment of this application, the PDU session creation request message may include the PDU session connection identifier, the S-NSSAI, the DN ID, and the like.

Step S54: The SMF obtains subscription data of the UE via the UDM.

The subscription data of the UE includes an identifier, of a data network, that allows to be used by the UE to establish the PDU session connection, whether separate authorization needs to be performed during establishment of the PDU session connection, and authorization data required when separate authorization is required for establishment of the PDU session.

Optionally, if separate authorization is required for establishment of the PDU session connection, after step S54, the method may further include step S55: Perform a PDU session authentication and authorization operation between the SMF and the UE.

Related messages between the authentication and authorization need to be transmitted via the AMF

Step S56: The SMF selects a PCF that serves the PDU session connection.

Step S57: The SMF obtains, from the PCF, a control policy of the PDU session connection.

In this embodiment of this application, the control policy of the PDU session connection may include a quality of service (quality of service, QoS) parameter, an aggregate maximum rate (Session AMBR) of the PDU session connection, and the like.

Step S58: The SMF selects a UPF that serves the PDU session connection.

In this embodiment of this application, the SMF may specifically select the corresponding UPF based on the S_NSSAI and the DN ID that are of the PDU session connection. When the PDU session connection corresponds to a local data network, the SMF selects a UPF that serves the local data network.

Step S59a: The SMF sends the PDU session establishment request message to the UPF.

The PDU session establishment request message is used to request the UPF to configure a resource for the PDU session, and the resource configured for the PDU session is used to transmit data of the PDU session connection. The PDU session establishment request may include one or more of the corresponding PDU session ID, QoS parameter, and session AMBR.

Step S59b: The UPF configures a user plane resource based on the PDU session establishment request, and sends a PDU session establishment request response message to the UPF.

The PDU session establishment request response message includes an IP address corresponding to the PDU session and core network tunnel configuration information (Core Network Tunnel Information) that are provided by the SMF.

Step S510: The UPF sends a PDU session creation response message to the AMF

The PDU session creation response message includes indication information indicating whether the PDU session connection is successfully created (for example, when the PDU session connection is successfully created, the indication information may be 1, or when the PDU session connection is not successfully created, the indication information may be 0), a PDU session setting message and a PDU session establishment accept message, where the PDU session setting message needs to be sent to an access network via the AMF, and the PDU session accept message needs to be sent to the UE via the AMF and through the access network.

In this embodiment of this application, the PDU session setting message may include the PDU session identifier, the QoS parameter, the core network tunnel configuration information, the aggregate maximum rate of the PDU session connection, the access network user plane function selection assistance information, and the like.

In this embodiment of this application, the access network user plane function selection assistance information may include the network slice corresponding to the PDU session, the data network corresponding to the PDU session, an identifier of the UPF in a core network, and the like.

In this embodiment of this application, the PDU session establishment accept message may include the QoS parameter, the identifier of the network slice, a network address allocated to the PDU session of the terminal device, the aggregate maximum rate of the PDU session connection, and the like.

Step S511: The AMF sends a PDU session request message to the access network.

In this embodiment of this application, the PDU session request message includes the PDU session setting message that needs to be sent to the access network and the PDU session establishment accept message that needs to be sent to the UE.

Step S512: The access network and the UE perform a resource configuration operation for the PDU session connection.

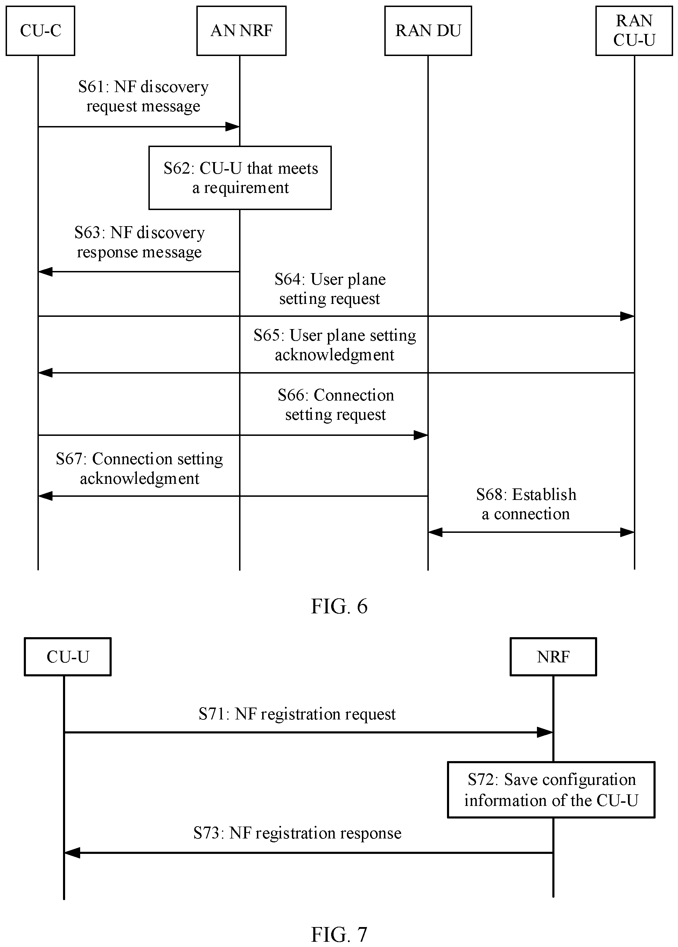

In this embodiment of this application, the access network may perform corresponding configuration in the access network based on the PDU session setting message from the core network. For a specific process, refer to the following description of a procedure shown in FIG. 7. Details are not described herein. The access network may further send, to the UE, the PDU session establishment accept message from the core network.

Step S513: After completing the configuration for the PDU session connection, the access network sends a PDU session request acknowledgment message to the AMF, to notify the AMF that corresponding processing is completed.

In a PDU session establishment process in this embodiment of this application, the core network provides, to the access network, the assistance information used for access network user plane selection, so that the access network may correctly select, based on the assistance information, a CU-U serving establishment of the PDU session connection, thereby meeting a service requirement for the establishment of the PDU session connection.

This application provides another communication procedure. The communication procedure may be used to resolve how to configure the PDU session when the access network receives the PDU session request information sent by the core network element in the procedure shown in FIG. 5. The communication procedure may further correspond to how the CU-C determines, based on the NRF and in the procedure shown in FIG. 4, the first CU-U corresponding to the PDU session. The NF discovery request may correspond to the third message in the procedure shown in FIG. 4. The NF discovery response message may correspond to the fourth message in the procedure shown in FIG. 4. For ease of description, in the procedure shown in FIG. 6, an example in which access network elements include an NRF, a DU, a CU-C, and a CU-U is used for description. It may be understood that network elements such as the NRF, the DU, the CU-C, and the CU-U in the following descriptions may be replaced with other network elements. A unified description is provided herein, and details are not described again subsequently. As shown in FIG. 6, the procedure specifically includes the following steps.

Step S61: The CU-C sends the NF discovery request message to an NRF on an access network side.

In this embodiment of this application, the NF discovery request may include one or more of an NF type N of the CU_U, an identifier of a network slice corresponding to the CU_U, an identifier of a data network corresponding to the CU_U, an identifier of a UPF, an identifier of a network area in which UE is located, and access network user plane selection assistance information. The access network user plane selection assistance information may include one or more of an identifier of a network slice that corresponds to a PDU session, an identifier of a data network, and an identifier of a core network UPF.

Step S62: The NRF determines information about a CU-U that meets a requirement, based on information in the NF discovery request and stored configuration information of one or more CU-Us.

In this embodiment of this application, the configuration information that is of the CU-Us deployed in an access network and that is stored in the NRF may include an address and an identifier of the CU-Us, an identifier of a network slice supported by the CU-Us and an identifier of a data network supported by the CU-Us, an identifier that a corresponding core network UPF has when the CU-Us and the core network UPF are co-located, and the like. The NRF may determine, based on the stored configuration information of the CU-Us and parameter information in the NF discovery request, the information about the CU-U that meets the requirement.

Step S63: The NRF sends a discovery response message to the CU-C.

In this embodiment of this application, the discovery response message may include information such as an address and an identifier of the CU_U.

Step S64: The CU-C sends a user plane setting request to the CU-U.

In this embodiment of this application, the user plane setting request may include a PDU session identifier, a QoS parameter, core network tunnel configuration information, a maximum aggregate speed, the identifier of the DN, an address of the DU, and the like.

Step S65: The CU-U sends a user plane setting acknowledgment to the CU-C.

Step S66: The CU-C sends a connection setting request to the DU, where the connection setting request includes address information of the CU-U.

Step S67: The DU sends a connection setting acknowledgment to the CU-C.

Step S68: The DU establishes a PDU connection to the CU-U, to complete a configuration process of the access network.

In this embodiment of this application, the CU-C may select a correct CU-U for the to-be-established PDU session based on user plane function selection assistance information provided in a core network, to meet a requirement of the to-be-established PDU session connection for an access network user plane function.

This application further provides a communication procedure. As shown in FIG. 7, the communication procedure may be used to resolve a process of how a CU-U registers with an NRF, so that the NRF stores configuration information of the CU-U. An NF registration request in the communication procedure may correspond to the fifth message in the procedure shown in FIG. 4. In the communication procedure shown in FIG. 7, an example in which access network elements include the NRF and the CU-U is used for description. It may be understood that the access network elements NRF and CU-U in the following descriptions may be replaced with other access network elements. A unified description is provided herein, and details are not described again subsequently. As shown in FIG. 7, the procedure may specifically include the following steps.

Step S71: The CU-U sends the NF registration request to the NRF

The registration request may include an identifier of a data network corresponding to the CU-U, network function type information of the CU-U, an identifier of the CU-U, a network address of the CU-U, an identifier of a network slice corresponding to the CU-U, an identifier of a network area corresponding to the CU-U, and an identifier of a UPF corresponding to the CU-U. Specifically, the network function type information of the CU-U may be a CUU, and the identifier of the CU-U is Region1_Set1_CUU1.

Step S72: The NRF stores the configuration information of the CU-U.

The configuration information of the CU-U may include the identifier of the data network corresponding to the CU-U, the network function type information of the CU-U, the identifier of the CU-U, the network address of the CU-U, the identifier of the network slice corresponding to the CU-U, the identifier of the network area corresponding to the CU-U, and the identifier of the UPF corresponding to the CU-U.

Step S73: The NRF sends an NF registration response to the CU-U, to notify the CU-U that registration is completed.

According to the method in this embodiment, when one or more access network CU-Us are deployed, the CU-Us may provide information about the CU-Us to an NRF on an access network side, so that the NRF can select, based on stored information about the CU-Us, a CU-U that meets a requirement.

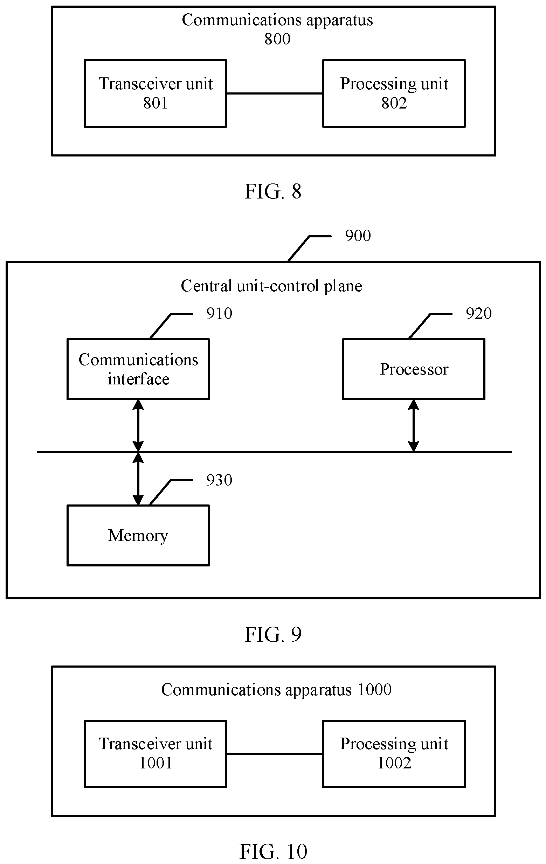

Based on a same inventive concept, as shown in FIG. 8, this application further provides a communications apparatus 800. The communications apparatus 800 may be applied to a CU-C. The communications apparatus 800 may be a processor, a chip, a chip system, a function module, or the like in the CU-C. The communications apparatus 800 may include a transceiver unit 801 and a processing unit 802.

The transceiver unit 801 is configured to receive a second message from a core network element, where the core network element may be but is not limited to an SMF, the first message carries assistance information, and the assistance information includes an identifier of a first data network corresponding to a PDU session.

The processing unit 802 is configured to determine, based on the assistance information, a first CU-U corresponding to the PDU session.

For specific descriptions of the transceiver unit 801 and the processing unit 802, refer to the descriptions in the foregoing embodiments. Details are not described herein again.

An embodiment of this application further provides a structure of a central unit-control plane CU-C. As shown in FIG. 9, a central unit-control plane 900 may include a communications interface 910 and a processor 920. Optionally, the CU-C 900 may further include a memory 930. The memory 930 may be disposed inside the CU-C, or may be disposed outside the CU-C. As shown in FIG. 8, all functions of the processing unit 802 may be implemented by the processor 920. The transceiver unit 801 may be implemented by the communications interface 910. The processor 920 receives information or sends a message by using the communications interface 910, and is configured to implement the methods performed by the CU-C (SMF or AMF) in FIG. 4 to FIG. 7. In an implementation process, steps in a processing procedure may complete, by using a hardware integrated logic circuit in the processor 920 or an instruction in a form of software, the methods performed by the CU-C in FIG. 4 to FIG. 7.

In this embodiment of this application, the communications interface 910 may be a circuit, a bus, a transceiver, or any other apparatus that may be configured to exchange information.

In this embodiment of this application, the processor 920 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by using a combination of hardware and a software unit that are in a processor. Program code executed by the processor 920 to implement the foregoing method may be stored in the memory 930. The memory 930 is coupled to the processor 920.

In this embodiment of this application, the coupling is an indirect coupling or a communication connection between apparatuses, units, or modules, may be in an electrical form, a mechanical form, or another form, and is used for information exchange between the apparatuses, the units, or the modules.

The processor 920 may operate in collaboration with the memory 930. The memory 930 may be a nonvolatile memory, for example, a hard disk (hard disk drive, HDD) or a solid-state drive (solid-state drive, SSD), or may be a volatile memory (volatile memory), for example, a random access memory (random-access memory, RAM). The memory 930 is any other medium that can be configured to carry or store expected program code in a form of an instruction or a data structure and that can be accessed by a computer, but is not limited thereto.

In this embodiment of this application, a specific connection medium between the communications interface 910, the processor 920, and the memory 930 is not limited. In this embodiment of this application, the memory 930, the processor 920, and the communications interface 910 are connected by using a bus in FIG. 9, and the bus is represented by a bold line in FIG. 9. A connection manner between other components is merely an example for description, and is not limited thereto. The bus may be classified into an address bus, a data bus, a control bus, and the like. For ease of representation, only one bold line is used to represent the bus in FIG. 9, but this does not mean that there is only one bus or only one type of bus. Based on a same concept, as shown in FIG. 10, this application further provides a communications apparatus 1000 that may be used in a core network element. The apparatus may be a processor, a chip, a chip system, a function module, or the like in the core network element. The communications apparatus 1000 may include a transceiver unit 1001 and a processing unit 1002.

The transceiver unit 1001 may be configured to receive a first message from a terminal device, where the first message is used to request to establish a protocol data unit session for the terminal device.

The processing unit 1002 may be configured to determine assistance information, where the assistance information includes at least an identifier of a first data network corresponding to the protocol data unit session.

The transceiver unit 1001 is further configured to send second information to a central unit-control plane, where the second message carries the assistance information.

For specific descriptions of the transceiver unit 1001 and the processing unit 1002, refer to the descriptions in the foregoing embodiments. Details are not described herein again.

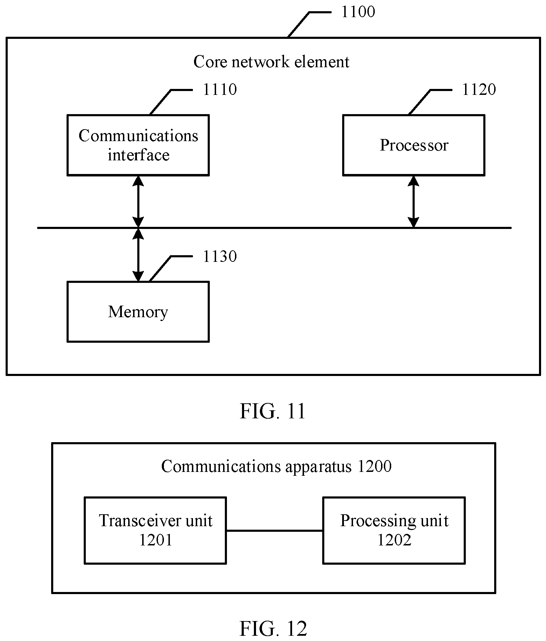

Based on a same concept, as shown in FIG. 11, this application further provides a core network element 1100, including a communications interface 1110 and a processor 1120. Optionally, the core network element 110 may further include a memory 1130. The memory 1130 may be disposed inside the core network element, or may be disposed outside the core network element. As shown in FIG. 10, the processing unit 1002 may be implemented by the processor 1120. Functions of the transceiver unit 1001 may be implemented by the communications interface 1110. The processor 1120 receives information or a message by using the communications interface 1110, and is configured to implement the methods performed by the core network element (SMF or AMF) in FIG. 4 to FIG. 7. In an implementation process, steps in a processing procedure may complete, by using a hardware integrated logic circuit in the processor 1120 or an instruction in a form of software, the methods performed by the core network element in FIG. 4 to FIG. 7.

In this embodiment of this application, the communications interface 1110 may be a circuit, a bus, a transceiver, or any other apparatus that may be configured to exchange information.

In this embodiment of this application, the processor 1120 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by using a combination of hardware and a software unit that are in a processor. Program code executed by the processor 1120 to implement the foregoing method may be stored in the memory 1130. The memory 1130 is coupled to the processor 1120.

In this embodiment of this application, the coupling is an indirect coupling or a communication connection between apparatuses, units, or modules, may be in an electrical form, a mechanical form, or another form, and is used for information exchange between the apparatuses, the units, or the modules.

The processor 1120 may operate in collaboration with the memory 1130. The memory 1130 may be a nonvolatile memory, for example, a hard disk (hard disk drive, HDD) or a solid-state drive (solid-state drive, SSD), or may be a volatile memory (volatile memory), for example, a random access memory (random-access memory, RAM). The memory 1130 is any other medium that can be configured to carry or store expected program code in a form of an instruction or a data structure and that can be accessed by a computer, but is not limited thereto.

A specific connection medium between the communications interface 1110, the processor 1120, and the memory 1130 is not limited in this embodiment of this application. In this embodiment of this application, the memory 1130, the processor 1120, and the communications interface 1110 are connected by using a bus in FIG. 11, and the bus is represented by a bold line in FIG. 11. A connection manner between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

Based on a same concept, as shown in FIG. 12, this application further provides a communications apparatus 1200. The communications apparatus 1200 may be a network function repository function NRF. The apparatus may be a processor, a chip, a chip system, a function module, or the like in the NRF. The communications apparatus 1200 may include:
a transceiver unit 1201, configured to receive a third message from a central unit-control plane, where the third message carries assistance information, and the assistance information includes at least an identifier of a first data network corresponding to a protocol data unit session; and
a processing unit 1202, configured to determine one or more central unit-user planes based on configuration information of the central unit-user planes and the assistance information, where the configuration information of the central unit-user planes includes at least an identifier of a data network corresponding to the central unit-user plane.

The transceiver unit 1201 is further configured to send a fourth message to the central unit-control plane, where the fourth message includes identification information of the one or more central unit-user planes.

Alternatively, the transceiver unit 1201 is configured to receive a fifth message from a central unit-user plane, where the fifth message includes at least the identifier of the data network corresponding to the central unit-user plane, and the seventh message is used to request to register the configuration information of the central unit-user plane with the network function repository function.

The processing unit 1202 is configured to determine the configuration information of the central unit-user plane based on the fifth message.

For a specific execution process, refer to the descriptions in the foregoing embodiments. Details are not described herein again.

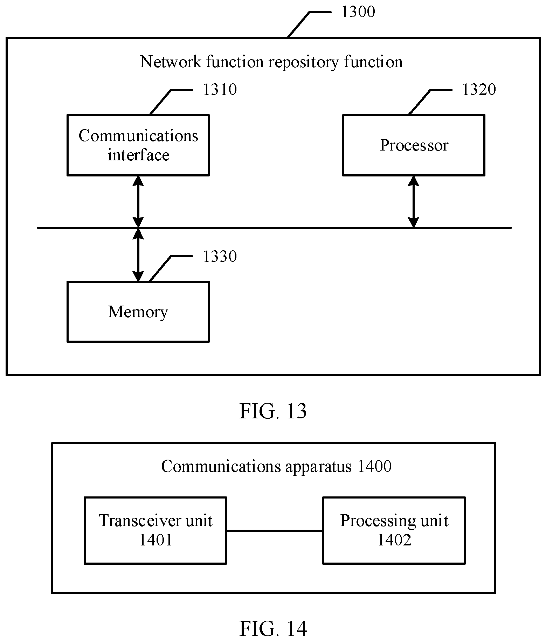

As shown in FIG. 13, based on a same inventive concept, an embodiment of this application further provides another structure of a network function repository function. As shown in FIG. 13, a network function repository function 1300 may include a communications interface 1310 and a processor 1320. The network function repository function 1300 may further include a memory 1330. The memory 1330 may be disposed inside the network function repository function, or may be disposed outside the network function repository function. The processing unit 1202 shown in FIG. 12 may be implemented by the processor 1320. The transceiver unit 1201 may be implemented by the communications interface 1310. The processor 1320 receives service data by using the communications interface 1310.

In this embodiment of this application, the communications interface 1310 may be a circuit, a bus, a transceiver, or any other apparatus that may be configured to exchange information. For example, the another apparatus may be a device connected to the network function repository function 1300. For example, the another apparatus may be an AN, UE, or the like.

In this embodiment of this application, the processor 1320 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by using a combination of hardware and a software unit that are in a processor. Program code executed by the processor 1320 to implement the foregoing method may be stored in the memory 1330. The memory 1330 is coupled to the processor 1320. The processor 1320 may operate in collaboration with the memory 1330. The memory 1330 may be a nonvolatile memory, for example, a hard disk (hard disk drive, HDD) or a solid-state drive (solid-state drive, SSD), or may be a volatile memory (volatile memory), for example, a random access memory (random-access memory, RAM). The memory 1330 is any other medium that can be configured to carry or store expected program code in a form of an instruction or a data structure and that can be accessed by a computer, but is not limited thereto.

In this embodiment of this application, a specific connection medium between the communications interface 1310, the processor 1320, and the memory 1330 is not limited. In this embodiment of this application, the memory 1330, the processor 1320, and the communications interface 1310 are connected by using a bus in FIG. 13, and the bus is represented by a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

Based on a same concept, as shown in FIG. 14, this application further provides a communications apparatus 1400. The apparatus 1400 may be applied to a distributed unit DU. The apparatus may be a processor, a chip, a chip system, a function module, or the like in the DU. The communications apparatus 1400 may include:
a transceiver unit 1401, configured to receive a sixth message from a central unit-control plane, where the sixth message includes an identifier of a first central unit-user plane that corresponds to a determined protocol data unit session and that is in one or more central unit-user planes in an access network; and
a processing unit 1402, configured to establish the protocol data unit session between the distributed unit and the first central unit-user plane based on the sixth message.

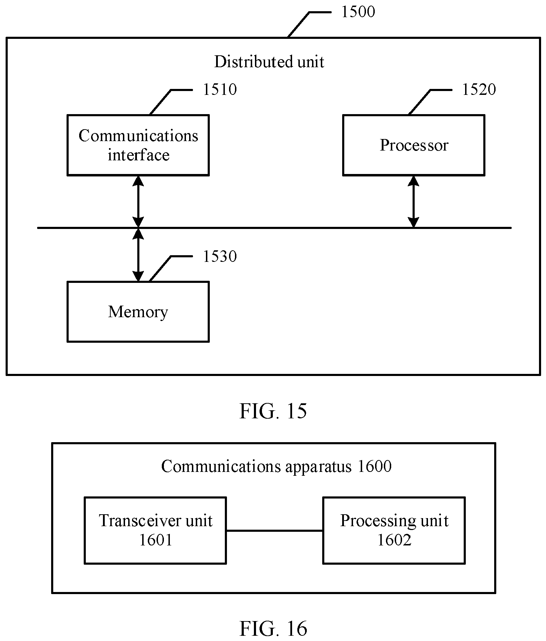

Based on a same concept, as shown in FIG. 15, an embodiment of this application further provides a structure of another distributed unit. As shown in FIG. 15, a distributed unit 1500 may include a communications interface 1510 and a processor 1520. The distributed unit 1500 may further include a memory 1530. The memory 1530 may be disposed inside the distributed unit, or may be disposed outside the distributed unit. The processing unit 1402 shown in FIG. 14 may be implemented by the processor 1320. The transceiver unit 1401 may be implemented by the communications interface 1310. The processor 1320 receives service data by using the communications interface 1310.

In this embodiment of this application, the communications interface 1310 may be a circuit, a bus, a transceiver, or any other apparatus that may be configured to exchange information.

In this embodiment of this application, the processor 1320 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by using a combination of hardware and a software unit that are in a processor. Program code executed by the processor 1320 to implement the foregoing method may be stored in the memory 1330. The memory 1330 is coupled to the processor 1320. The processor 1320 may operate in collaboration with the memory 1330. The memory 1330 may be a nonvolatile memory, for example, a hard disk (hard disk drive, HDD) or a solid-state drive (solid-state drive, SSD), or may be a volatile memory (volatile memory), for example, a random access memory (random-access memory, RAM). The memory 1330 is any other medium that can be configured to carry or store expected program code in a form of an instruction or a data structure and that can be accessed by a computer, but is not limited thereto.

In this embodiment of this application, a specific connection medium between the communications interface 1310, the processor 1320, and the memory 1330 is not limited. In this embodiment of this application, the memory 1330, the processor 1320, and the communications interface 1310 are connected by using a bus in FIG. 13, and the bus is represented by a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

Based on a same concept, as shown in FIG. 16, this application further provides a communications apparatus 1600. The communications apparatus may be applied to a central unit-user plane CU-U. The apparatus may be a processor, a chip, a chip system, a function module, or the like in the CU-U. The communications apparatus 1600 may include:
a transceiver unit 1601, configured to receive a seventh message from a central unit-control plane, where the seventh message includes at least core network tunnel configuration information; and
a processing unit 1602, configured to establish a protocol data unit session between the first central unit-user plane and a core network user plane function based on the seventh message.

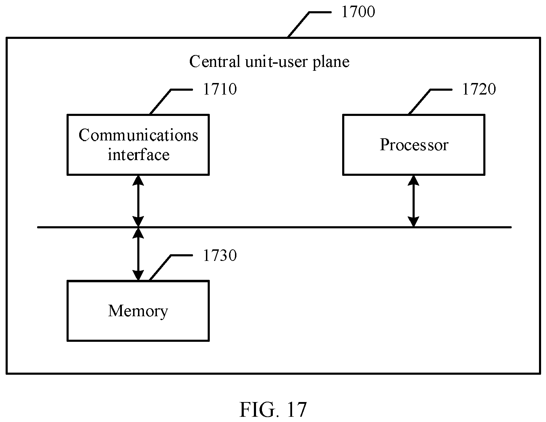

Based on a same concept, as shown in FIG. 17, an embodiment of this application further provides another structure of a central unit-user plane. As shown in FIG. 17, the central unit-user plane 1700 may include a communications interface 1710 and a processor 1720. The central unit-user plane 1700 may further include a memory 1730. The memory 1730 may be disposed inside the central unit-user plane, or may be disposed outside the central unit-user plane. The processing unit 1602 shown in FIG. 16 may be implemented by the processor 1320. The transceiver unit 1601 may be implemented by the communications interface 1310. The processor 1320 receives service data by using the communications interface 1310.

In this embodiment of this application, the communications interface 1310 may be a circuit, a bus, a transceiver, or any other apparatus that may be configured to exchange information.

In this embodiment of this application, the processor 1320 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor, any conventional processor, or the like. The steps of the method disclosed with reference to the embodiments of this application may be directly performed by a hardware processor, or may be performed by using a combination of hardware and a software unit that are in a processor. Program code executed by the processor 1320 to implement the foregoing method may be stored in the memory 1330. The memory 1330 is coupled to the processor 1320. The processor 1320 may operate in collaboration with the memory 1330. The memory 1330 may be a nonvolatile memory, for example, a hard disk (hard disk drive, HDD) or a solid-state drive (solid-state drive, SSD), or may be a volatile memory (volatile memory), for example, a random access memory (random-access memory, RAM). The memory 1330 is any other medium that can be configured to carry or store expected program code in a form of an instruction or a data structure and that can be accessed by a computer, but is not limited thereto.

In this embodiment of this application, a specific connection medium between the communications interface 1310, the processor 1320, and the memory 1330 is not limited. In this embodiment of this application, the memory 1330, the processor 1320, and the communications interface 1310 are connected by using a bus in FIG. 13, and the bus is represented by a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include: any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function in any one or more of the foregoing embodiments, for example, obtain or process the information or the message in the foregoing methods. Optionally, the chip further includes a memory. The memory is configured to store a program instruction and data that are necessary and executed by the processor. The chip may include a chip, or may include a chip and another discrete device.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or the another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communications method, comprising:
receiving, by a central unit-control plane, a second message from a core network element, wherein the second message carries assistance information, and the assistance information comprises an identifier of a first data network corresponding to a protocol data unit session; and
determining, by the central unit-control plane based on the assistance information, a first central unit-user plane corresponding to the protocol data unit session.

2. The method according to claim 1, wherein an access network corresponding to the central unit-control plane comprises one or more central unit-user planes, and the method further comprises:
locally obtaining, by the central unit-control plane, configuration information of the one or more central unit-user planes, wherein the configuration information comprises an identifier of a data network corresponding to the central unit-user plane; and
the determining, by the central unit-control plane based on the assistance information, a first central unit-user plane corresponding to the protocol data unit session comprises:
determining, by the central unit-control plane based on the assistance information and the configuration information of the one or more central unit-user planes, the first central unit-user plane corresponding to the protocol data unit session.

3. The method according to claim 1, wherein an access network corresponding to the central unit-control plane comprises one or more central unit-user planes; and
the determining, by the central unit-control plane based on the assistance information, a first central unit-user plane corresponding to the protocol data unit session comprises:
sending, by the central unit-control plane, a third message to a network function repository function, wherein the third message carries the assistance information, the network function repository function stores configuration information of the one or more central unit-user planes, and the configuration information comprises an identifier of a data network corresponding to the central unit-user plane;
receiving, by the central unit-control plane, a fourth message from the network function repository function, wherein the fourth message comprises identification information of the one or more central unit-user planes; and
determining, by the central unit-control plane based on the fourth message, the first central unit-user plane corresponding to the protocol data unit session.

4. The method according to any one of claims 1 to 3, wherein the assistance information further comprises one or more of an identifier of a network slice corresponding to the protocol data unit session and an identifier of a core network user plane function corresponding to the protocol data unit session; and
the configuration information further comprises one or more of an identifier of a network slice corresponding to the central unit-user plane and the identifier of the core network user plane function corresponding to the protocol data unit session.

5. The method according to any one of claims 1 to 4, wherein the method further comprises:
sending, by the central unit-control plane, a sixth message to a distributed unit corresponding to the protocol data unit session, wherein the sixth message comprises an identifier of the first central unit-user plane, and the sixth message is used to request the distributed unit to establish the protocol data unit session between the distributed unit and the first central unit-user plane.

6. The method according to any one of claims 1 to 5, wherein the second message further carries protocol data unit session setting information, and the protocol data unit session setting information comprises core network tunnel configuration information; and
the method further comprises:
determining, by the central unit-control plane, a seventh message based on the protocol data unit session setting information, wherein the seventh message comprises the core network tunnel configuration information; and
sending, by the central unit-control plane, the seventh message to the first central unit-user plane, wherein the seventh message is used to request the first central unit-user plane to establish the protocol data unit session between the first central unit-user plane and the core network user plane function.

7. The method according to claim 6, wherein the protocol data unit session setting information further comprises one or more of a protocol data unit session identifier, a communication quality parameter identifier, and an aggregate maximum rate; and
the seventh message further comprises one or more of the identifier of the data network corresponding to the protocol data unit session, an identifier of a network slice, the protocol data unit session identifier, the communication quality parameter identifier, and the aggregate maximum rate.

8. A communications method, comprising:
receiving, by a core network element, a first message from a terminal device, wherein the first message is used to request to establish a protocol data unit session for the terminal device;
determining, by the core network element, assistance information, wherein the assistance information comprises at least an identifier of a first data network corresponding to the protocol data unit session; and
sending, by the core network element, second information to a central unit-control plane, wherein the second message carries the assistance information.

9. The method according to claim 8, wherein the assistance information further comprises at least one of an identifier of a network slice corresponding to the protocol data unit session and an identifier of a core network user plane function corresponding to the protocol data unit session.

10. A communications method, comprising:
receiving, by a network function repository function, a third message from a central unit-control plane, wherein the third message carries assistance information, and the assistance information comprises at least an identifier of a first data network corresponding to a protocol data unit session;
determining, by the network function repository function, one or more central unit-user planes based on configuration information of the central unit-user planes and the assistance information, wherein the configuration information of the central unit-user plane comprises at least an identifier of a data network corresponding to the central unit-user plane; and
sending, by the network function repository function, a fourth message to the central unit-control plane, wherein the fourth message comprises identification information of the one or more central unit-user planes.

11. The method according to claim 10, wherein the assistance information further comprises one or more of an identifier of a network slice corresponding to the protocol data unit session and an identifier of a core network user plane function corresponding to the protocol data unit session; and
the configuration information further comprises one or more of an identifier of a network slice corresponding to the central unit-user plane and the identifier of the core network user plane function corresponding to the protocol data unit session.

12. A communications method, comprising:
receiving, by a network function repository function, a fifth message from a central unit-user plane, wherein the fifth message comprises at least an identifier of a data network corresponding to the central unit-user plane, and the fifth message is used to request to register configuration information of the central unit-user plane with the network function repository function; and
determining, by the network function repository function, the configuration information of the central unit-user plane based on the fifth message.

13. The method according to claim 12, wherein the fifth message further comprises network function type information of the central unit-user plane, an identifier of the central unit-user plane, a network address of the central unit-user plane, an identifier of a network slice corresponding to the central unit-user plane, an identifier of a network area corresponding to the central unit-user plane, and an identifier of a core network user plane function corresponding to the central unit-user plane; and
the configuration information of the central unit-user plane further comprises the network function type information of the central unit-user plane, the identifier of the central unit-user plane, the network address of the central unit-user plane, the identifier of the network slice corresponding to the central unit-user plane, the identifier of the network area corresponding to the central unit-user plane, and the identifier of the core network user plane function corresponding to the central unit-user plane.

14. A communications method, comprising:
receiving, by a distributed unit, a sixth message from a central unit-control plane, wherein the sixth message comprises an identifier of a first central unit-user plane that corresponds to a determined protocol data unit session and that is in one or more central unit-user planes in an access network; and
establishing, by the distributed unit, the protocol data unit session between the distributed unit and the first central unit-user plane based on the sixth message.

15. A communications method, comprising:
receiving, by a first central unit-user plane, a seventh message from a central unit-control plane, wherein the seventh message comprises at least core network tunnel configuration information; and
establishing, by the first central unit-user plane, a protocol data unit session between the first central unit-user plane and a core network user plane function based on the seventh message.

16. The method according to claim 15, wherein the seventh message may further comprise one or more of an identifier of a data network corresponding to the protocol data unit session, an identifier of a network slice, a protocol data unit session identifier, a communication quality parameter identifier, and an aggregate maximum rate.

17. A communications apparatus, wherein the communications apparatus is applied to a central unit-control plane, and the apparatus comprises:
a transceiver unit, configured to receive a second message from a core network element, wherein the second message carries assistance information, and the assistance information comprises an identifier of a first data network corresponding to a protocol data unit session; and
a processing unit, configured to determine, based on the assistance information, a first central unit-user plane corresponding to the protocol data unit session.

18. The apparatus according to claim 17, wherein an access network corresponding to the central unit-control plane comprises one or more central unit-user planes, and the processing unit is further configured to:
locally obtain configuration information of the one or more central unit-user planes, wherein the configuration information comprises an identifier of a data network corresponding to the central unit-user plane; and
when determining, based on the assistance information, the first central unit-user plane corresponding to the protocol data unit session, the processing unit is specifically configured to:
determine, based on the assistance information and the configuration information of the one or more central unit-user planes, the first central unit-user plane corresponding to the protocol data unit session.

19. The apparatus according to claim 17, wherein an access network corresponding to the central unit-control plane comprises one or more central unit-user planes;
the transceiver unit is further configured to:
send a third message to a network function repository function, wherein the third message carries the assistance information, the network function repository function stores configuration information of the one or more central unit-user planes, and the configuration information comprises an identifier of a data network corresponding to the central unit-user plane; and
receive a fourth message from the network function repository function, wherein the fourth message comprises identification information of the one or more central unit-user planes; and
the processing unit is further configured to:
determine, based on the fourth message, the first central unit-user plane corresponding to the protocol data unit session.

20. The apparatus according to any one of claims 17 to 19, wherein the assistance information further comprises one or more of an identifier of a network slice corresponding to the protocol data unit session and an identifier of a core network user plane function corresponding to the protocol data unit session; and
the configuration information further comprises one or more of an identifier of a network slice corresponding to the central unit-user plane and the identifier of the core network user plane function corresponding to the protocol data unit session.

21. The apparatus according to any one of claims 17 to 20, wherein the transceiver unit is further configured to:
send a sixth message to a distributed unit corresponding to the protocol data unit session, wherein the sixth message comprises an identifier of the first central unit-user plane, and the sixth message is used to request the distributed unit to establish the protocol data unit session between the distributed unit and the first central unit-user plane.

22. The apparatus according to any one of claims 17 to 21, wherein the second message further carries protocol data unit session setting information, and the protocol data unit session setting information comprises core network tunnel configuration information;
the processing unit is further configured to:
determine a seventh message based on the protocol data unit session setting information, wherein the seventh message comprises the core network tunnel configuration information; and
the transceiver unit is further configured to:
send the seventh message to the first central unit-user plane, wherein the seventh message is used to request the first central unit-user plane to establish the protocol data unit session between the first central unit-user plane and the core network user plane function.

23. The apparatus according to claim 22, wherein the protocol data unit session setting information further comprises one or more of a protocol data unit session identifier, a communication quality parameter identifier, and an aggregate maximum rate; and
the seventh message further comprises one or more of the identifier of the data network corresponding to the protocol data unit session, an identifier of a network slice, the protocol data unit session identifier, the communication quality parameter identifier, and the aggregate maximum rate.

24. A communications apparatus, wherein the apparatus is applied to a core network element, and the apparatus comprises:
a transceiver unit, configured to receive a first message from a terminal device, wherein the first message is used to request to establish a protocol data unit session for the terminal device; and
a processing unit, configured to determine assistance information, wherein the assistance information comprises at least an identifier of a first data network corresponding to the protocol data unit session, and
the transceiver unit is further configured to send second information to a central unit-control plane, wherein the second message carries the assistance information.

25. The apparatus according to claim 24, wherein the assistance information further comprises at least one of an identifier of a network slice corresponding to the protocol data unit session and an identifier of a core network user plane function corresponding to the protocol data unit session.

26. A communications apparatus, wherein the apparatus is applied to a network function repository function, and the apparatus comprises:
a transceiver unit, configured to receive a third message from a central unit-control plane, wherein the third message carries assistance information, and the assistance information comprises at least an identifier of a first data network corresponding to a protocol data unit session; and
a processing unit, configured to determine one or more central unit-user planes based on configuration information of the central unit-user planes and the assistance information, wherein the configuration information of the central unit-user planes comprises at least an identifier of a data network corresponding to the central unit-user plane, wherein
the transceiver unit is further configured to send a fourth message to the central unit-control plane, wherein the fourth message comprises identification information of the one or more central unit-user planes.

27. The apparatus according to claim 26, wherein the assistance information further comprises one or more of an identifier of a network slice corresponding to the protocol data unit session and an identifier of a core network user plane function corresponding to the protocol data unit session; and
the configuration information further comprises one or more of an identifier of a network slice corresponding to the central unit-user plane and the identifier of the core network user plane function corresponding to the protocol data unit session.

28. A communications apparatus, wherein the apparatus is applied to a network function repository function, and the apparatus comprises:
a transceiver unit, configured to receive a fifth message from a central unit-user plane, wherein the fifth message comprises at least an identifier of a data network corresponding to the central unit-user plane, and the fifth message is used to request to register configuration information of the central unit-user plane with the network function repository function; and
a processing unit, configured to determine the configuration information of the central unit-user plane based on the fifth message.

29. The apparatus according to claim 28, wherein the fifth message further comprises network function type information of the central unit-user plane, an identifier of the central unit-user plane, a network address of the central unit-user plane, an identifier of a network slice corresponding to the central unit-user plane, an identifier of a network area corresponding to the central unit-user plane, and an identifier of a core network user plane function corresponding to the central unit-user plane; and
the configuration information of the central unit-user plane further comprises the network function type information of the central unit-user plane, the identifier of the central unit-user plane, the network address of the central unit-user plane, the identifier of the network slice corresponding to the central unit-user plane, the identifier of the network area corresponding to the central unit-user plane, and the identifier of the core network user plane function corresponding to the central unit-user plane.

30. A communications apparatus, wherein the apparatus is applied to a distributed unit, and the apparatus comprises:
a transceiver unit, configured to receive a sixth message from a central unit-control plane, wherein the sixth message comprises an identifier of a first central unit-user plane that corresponds to a determined protocol data unit session and that is in one or more central unit-user planes in an access network; and
a processing unit, configured to establish the protocol data unit session between the distributed unit and the first central unit-user plane based on the sixth message.

31. A communications apparatus, wherein the apparatus is applied to a central unit-user plane, and the apparatus comprises:
a transceiver unit, configured to receive a seventh message from a central unit-control plane, wherein the seventh message comprises at least core network tunnel configuration information; and
a processing unit, configured to establish a protocol data unit session between the first central unit-user plane and a core network user plane function based on the seventh message.

32. The apparatus according to claim 31, wherein the seventh message may further comprise one or more of an identifier of a data network corresponding to the protocol data unit session, an identifier of a network slice, a protocol data unit session identifier, a communication quality parameter identifier, and an aggregate maximum rate.

33. A communications apparatus, comprising a communications interface and at least one processor, wherein the communications interface and the at least one processor are interconnected by using a line, and the communications interface is configured to perform operations of receiving and sending a message on an apparatus side in the method according to any one of claims 1 to 16; and
the at least one processor invokes an instruction, to perform an operation of processing or controlling a message on the apparatus in the method according to any one of claims 1 to 16.

34. A chip system, comprising at least one processor and an interface circuit, the interface circuit and the at least one processor are interconnected by using a line, and the processor runs an instruction to perform the method according to any one of claims 1 to 16.

35. A communications apparatus, configured to perform the method according to any one of claims 1 to 16.

36. A computer program product comprising an instruction, wherein when the computer program product runs on a computer, the computer is enabled to perform the method according to any one of claims 1 to 16.

37. A computer-readable storage medium, comprising an instruction, wherein when the instruction is run on a computer, the computer is enabled to perform the method according to any one of claims 1 to 16.

38. A communications system, comprising the apparatus according to any one of claims 17 to 23, the apparatus according to claims 24 and 25, the apparatus according to claims 26 and 27, the apparatus according to claims 28 and 29, the apparatus according to claim 30, and/or the apparatus according to claims 31 and 32.
